(19) **Europäisches Patentamt European Patent Office Office européen des brevets**

(11) **EP 4 197 806 B1**

(12) **EUROPEAN PATENT SPECIFICATION**

(45) Date of publication and mention
of the grant of the patent:
**02.04.2025 Bulletin 2025/14**

(21) Application number: **22198571.6**

(22) Date of filing: **29.09.2022**

(51) International Patent Classification (IPC):
**B60C 1/00** $^{(2006.01)}$    **C08L 9/06** $^{(2006.01)}$
**B60C 11/00** $^{(2006.01)}$    **B60C 11/03** $^{(2006.01)}$

(52) Cooperative Patent Classification (CPC):
(C-Sets available)
**C08L 9/06; B60C 1/0016; B60C 11/033;**
B60C 2011/0033; B60C 2011/0355; B60C 2200/04;
Y02T 10/86    (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2021   JP 2021203407**

(43) Date of publication of application:
**21.06.2023   Bulletin 2023/25**

(73) Proprietor: **Sumitomo Rubber Industries, Ltd.**
**Kobe-shi, Hyogo 651-0072 (JP)**

(72) Inventors:
• **TOMISAKI, Yukari**
**Kobe-shi, 651-0072 (JP)**

• **TSUCHIDA, Tsuyoshi**
**Kobe-shi, 651-0072 (JP)**
• **HATA, Kanako**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 785 928      EP-A1- 3 967 514
EP-A1- 3 978 269      WO-A1-2020/241191
WO-A1-2020/261874**

EP 4 197 806 B1

(52) Cooperative Patent Classification (CPC): (Cont.)

C-Sets
**C08L 9/06, C08L 7/00, C08L 9/00, C08L 47/00,
C08L 91/00, C08L 91/08, C08K 3/04, C08K 3/36,
C08K 5/548, C08K 5/18, C08K 5/09, C08K 3/22,**

**C08K 3/06, C08K 5/47, C08K 5/31;
C08L 9/06, C08L 9/00, C08L 47/00, C08L 91/00,
C08L 91/08, C08K 3/04, C08K 3/36, C08K 5/548,
C08K 5/18, C08K 5/09, C08K 3/22, C08K 3/06,
C08K 5/47, C08K 5/31**

**Description**

TECHNICAL FIELD

The present invention relates to a tire.

BACKGROUND ART

An exemplary method for simultaneously providing abrasion resistance to a tire is to improve the order of introduction of chemicals in rubber mixing (for example, Patent Literature 1). However, in these days of welldeveloped automobile highways and increasingly sophisticated automobiles, repeated high-speed running is not uncommon, and therefore it is believed that there is room for further improvement in terms of abrasion resistance during high-speed running.

CITATION LIST

PATENT LITERATURE

Patent Literature 1: JP 2021-50355 A

SUMMARY OF INVENTION

TECHNICAL PROBLEM

The present invention aims to solve the above problem and provide a tire having an improved abrasion resistance during high-speed running.

SOLUTION TO PROBLEM

Although tire rubber properties greatly affect tire performance, not only the rubber properties but also tire shape (tread gauge, etc.) have a large influence on the development of tire performance. To improve the resistance to abrasion, which partially constitutes a fracture event, the amount of filler is important, and the reinforcement of a tire cannot be ensured unless at least a certain amount of filler is added. However, the amount of filler and abrasion resistance do not have a complete proportional relationship, and too much filler will deteriorate the performance.

In view of the above, the present invention was completed based on the finding that excellent abrasion resistance, especially during high-speed running, can be imparted to a tire by adjusting the polymer content PC and ash content Ash of the rubber composition to predetermined ranges and, at the same time, focusing on the tire shape to adjust the product of the thickness G (mm) of the tread portion measured on the equator in a cross-section taken in the radial direction of the tire and the ash content Ash (% by mass) to a predetermined value or less.

The present invention relates to a tire, including a tread portion,
the tire satisfying the following relationships (1) to (3):

$$(1)\ PC \geq 55\%\ \text{by mass};$$

$$(2)\ 10\%\ \text{by mass} \leq Ash \leq 25\%\ \text{by mass};$$

and

$$(3)\ Ash \times G \leq 250,$$

wherein PC and Ash represent a polymer content (% by mass) and an ash content (% by mass), respectively, of a rubber composition contained in the tread portion, and G represents a thickness (mm) of the tread portion measured on an equator in a cross-section taken in a radial direction of the tire.

ADVANTAGEOUS EFFECTS OF INVENTION

The tire of the present invention includes a tread portion and satisfies relationships (1) to (3) with respect to the polymer content PC (% by mass) and ash content Ash (% by mass) of a rubber composition contained in the tread portion, and the thickness G (mm) of the tread portion measured on the equator in a cross-section taken in the radial direction of the tire. Such a tire has an improved abrasion resistance during high-speed running.

BRIEF DESCRIPTION OF DRAWINGS

FIG. 1 shows a cross-section of a part of a pneumatic tire according to one embodiment of the present invention taken in the meridional direction.
FIG. 2 shows a cross-section of a tread portion of a tire taken along a plane including the tire axis.

DESCRIPTION OF EMBODIMENTS

The tire of the present invention satisfies relationships (1) to (3) with respect to the polymer content PC (% by mass) and ash content Ash (% by mass) of the rubber composition contained in the tread portion, and the thickness G (mm) of the tread portion measured on the equator in a cross-section taken in the radial direction of the tire.

The mechanism of the above advantageous effect is not clear but is believed to be as follows.

In general, to improve abrasion resistance, the polymer portion forming the matrix of the rubber composition needs to be reinforced by interaction with a reinforcing agent. However, simply increasing the amount of reinforcing agent will increase the amount of polymer constrained by the reinforcing agent, causing hardening of the rubber. Thus, a higher frequency will occur upon contact with the road surface, especially during high-speed running, and further the rubber cannot sufficiently conform to the road surface and will be worn away. As a result, it is considered that abrasion resistance cannot be sufficiently improved.

To overcome this, according to the present invention, the polymer content (PC) is adjusted to 55% by mass or higher (relationship (1)) to account for more than half the amount of the rubber composition, and further the ash content (Ash) is adjusted to 10 to 25% by mass (relationship (2)). This facilitates the formation of a polymer gel by interaction between the polymer components and ash components in the rubber. At the same time, the proportion of the polymer gel in the polymer components can be increased. Further, as relationship (2) is satisfied to reduce the proportion of the ash components such as silica, hardening of the micro-domains can be prevented and conforming to the road surface can also be facilitated. As a result, it is considered that abrasion resistance can be improved.

Moreover, the ash content affects the heat generation in the rubber, and the generated heat causes the rubber to soften so that the rubber can be greatly deformed by friction with the road surface and thus can be easily worn away; further, a large thickness G (gauge) of the tread portion facilitates the accumulation of heat due to deformation during running. Thus, it is considered that abrasion resistance can be improved by reducing the ash content with the increase in gauge (or reducing the gauge with the increase in ash content) so that the product of the thickness of the tread portion and the ash content is adjusted to 250 or less (relationship (3)).

Accordingly, it is believed that the present invention improves abrasion resistance during high-speed running by satisfying relationships (1) to (3).

Thus, the present tire solves the problem (purpose) of improving abrasion resistance during high-speed running by a formulation satisfying the relationship (1): $PC \geq 55\%$ by mass, the relationship (2): 10% by mass $\leq Ash \leq 25\%$ by mass, and the relationship (3): $Ash \times G \leq 250$, wherein PC and Ash represent the polymer content (% by mass) and the ash content (% by mass), respectively, of the rubber composition contained in the tread portion, and G represents the thickness (mm) of the tread portion measured on the equator in a cross-section taken in the radial direction of the tire. In other words, the parameters of the relationship (1): $PC \geq 55\%$ by mass, the relationship (2): 10% by mass $\leq Ash \leq 25\%$ by mass, and the relationship (3): $Ash \times G \leq 250$ do not define the problem (purpose), and the problem herein is to improve abrasion resistance during high-speed running. In order to solve this problem, the tire has been formulated to satisfy the parameters.

<Tread rubber composition>

The tire of the present invention includes a tread portion which contains a tread rubber composition (vulcanized rubber composition) satisfying the following relationship (1):

$$(1) \quad PC \geq 55\% \text{ by mass}$$

wherein PC represents the polymer content (% by mass) of the rubber composition.

The lower limit of PC is preferably 60% by mass or higher, more preferably 63% by mass or higher, still more preferably 66% by mass or higher, particularly preferably 68% by mass or higher. The upper limit is preferably 85% by mass or lower, more preferably 80% by mass or lower, still more preferably 77% by mass or lower, particularly preferably 75% by mass or lower. When PC is within the range indicated above, the advantageous effect tends to be better achieved.

The tire of the present invention includes a tread portion which contains a tread rubber composition (vulcanized rubber composition) satisfying the following relationship (2):

$$(2) \quad 10\% \text{ by mass} \leq \text{Ash} \leq 25\% \text{ by mass}$$

wherein Ash represents the ash content (% by mass) of the rubber composition.

The lower limit of Ash is preferably 12% by mass or higher, more preferably 13% by mass or higher, still more preferably 14% by mass or higher, particularly preferably 16% by mass or higher. The upper limit is preferably 23% by mass or lower, more preferably 21% by mass or lower, still more preferably 19% by mass or lower, particularly preferably 18% by mass or lower. When Ash is within the range indicated above, the advantageous effect tends to be better achieved.

Here, the polymer content (PC) and ash content (Ash) of the (vulcanized) rubber composition can be measured as described below.

First, the rubber composition (sample) is subjected to acetone extraction in accordance with JIS K 6229:2015.

The polymer content (PC, unit: % by mass based on the rubber composition (sample)) is calculated from the decrease in the amount (mass) of the sample remaining after the acetone extraction when it is heated (from room temperature to 750°C) in nitrogen for pyrolysis and gasification of organic matter in accordance with JIS K 6226-1:2003.

Next, the sample after the pyrolysis and gasification is heated in the air for oxidative combustion.

The ash content (Ash, unit: % by mass based on the rubber composition (sample)) is calculated from the mass of the components which remain unburned in the oxidative combustion (ash).

Here, the sample used in the measurements is collected from the tread portion of the tire.

PC and Ash may be controlled by methods known to those skilled in the art. For example, PC tends to increase as the amount of rubber components in the rubber composition increases. Ash tends to increase as the amount of components which remain unburned in oxidative combustion, such as silica, in the rubber composition increases.

The tread rubber composition contains one or more rubber components.

The rubber components in the rubber composition contribute to cross-linking and generally correspond to polymers having a weight average molecular weight (Mw) of 10,000 or more.

The weight average molecular weight of the rubber components is preferably 50,000 or more, more preferably 150,000 or more, still more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Any rubber component may be used, including those known in the tire field. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these may be used alone, or two or more of these may be used in combination. Among these, the rubber components preferably include any one selected from isoprene-based rubbers, BR, and SBR in order to better achieve the advantageous effect. The rubber components more preferably include a combination of two or more of them, including SBR and BR or a combination of an isoprene-based rubber, BR, and SBR.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

When the rubber composition contains isoprene-based rubbers, the amount of isoprene-based rubbers based on 100% by mass of the rubber component content is preferably 5% by mass or more, more preferably 10% by mass or more, still more preferably 15% by mass or more, but is preferably 30% by mass or less, more preferably 25% by mass or less, still more preferably 20% by mass or less. When the amount is within the range indicated above, the advantageous effect tends to be better achieved.

Any BR may be used, and examples include those commonly used in the tire industry, including: high cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earthcatalyzed BR). Each of these may be used alone, or two or more of these may be used in combination.

The cis content of the BR is preferably 80% by mass or higher, more preferably 85% by mass or higher, still more preferably 90% by mass or higher, but is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the rubber composition contains BR, the amount of BR based on 100% by mass of the rubber component content is preferably 5% by mass or more, more preferably 10% by mass or more, still more preferably 15% by mass or more, but is preferably 50% by mass or less, more preferably 40% by mass or less, still more preferably 30% by mass or less, particularly preferably 20% by mass or less. When the amount is within the range indicated above, the advantageous effect tends to be better achieved.

Any SBR may be used, and examples include emulsionpolymerized styrene-butadiene rubbers (E-SBR) and solutionpolymerized styrene-butadiene rubbers (S-SBR). Hydrogenated SBR may also be used in which the double bonds of the butadiene portions are appropriately hydrogenated. Examples of commercial products include those available from Sumitomo Chemical Co., Ltd., JSR Corporation, Asahi Kasei Corporation, Zeon Corporation, etc.

The styrene content of the SBR is preferably 5% by mass or higher, more preferably 10% by mass or higher, still more preferably 15% by mass or higher, particularly preferably 20% by mass or higher. The styrene content is preferably 50% by mass or lower, more preferably 40% by mass or lower, still more preferably 30% by mass or lower. When the styrene content is within the range indicated above, the advantageous effect tends to be better achieved.

Herein, the styrene content of the SBR can be determined by $^1$H-NMR analysis.

The vinyl content of the SBR is preferably 10 mol% or higher, more preferably 20 mol% or higher, still more preferably 30 mol% or higher. The vinyl content is preferably 90 mol% or lower, more preferably 80 mol% or lower, still more preferably 70 mol% or lower. When the vinyl content is within the range indicated above, the advantageous effect tends to be better achieved.

Herein, the vinyl content (1,2-butadiene unit content) of the SBR can be measured by infrared absorption spectrometry.

When the rubber composition contains SBR, the amount of SBR based on 100% by mass of the rubber component content is preferably 50% by mass or more, more preferably 70% by mass or more, still more preferably 80% by mass or more, particularly preferably 85% by mass or more, but is preferably 95% by mass or less, more preferably 90% by mass or less. When the amount is within the range indicated above, the advantageous effect tends to be better achieved.

When the rubber composition contains SBR and BR, the combined amount of SBR and BR based on 100% by mass of the rubber component content is preferably 50% by mass or more, more preferably 75% by mass or more, still more preferably 85% by mass or more, particularly preferably 90% by mass or more, and may be 100% by mass. When the combined amount is within the range indicated above, the advantageous effect tends to be better achieved.

The rubber components may include oil extended rubbers prepared by oil extension. These may be used alone or in combinations of two or more. The oils used in oil extended rubbers may be as described later. Moreover, the oil content of the oil extended rubbers is not limited but is usually about 10 to 50 parts by mass per 100 parts by mass of the rubber solids content.

The rubber components may be modified to introduce therein a functional group interactive with filler such as silica.

Examples of the functional group include a silicon-containing group ($-SiR_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, each of which may be substituted. Preferred among these is a silicon-containing group. More preferred is $-SiR_3$ where each R is the same or different and represents a hydrogen atom, a hydroxy group, a hydrocarbon group (preferably a C1-C6 hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition preferably contains a filler.

Any filler may be used, including materials known in the rubber field. Examples include inorganic fillers such as silica, carbon black, calcium carbonate, talc, alumina, clay, aluminum hydroxide, aluminum oxide, and mica. Among these, carbon black or silica is preferred in order to better achieve the advantageous effect.

Any carbon black may be used in the rubber composition, and examples include N134, N110, N220, N234, N219, N339, N330, N326, N351, N550, and N762. Besides such carbon black produced by burning mineral oils, carbon black produced by burning biomass-derived materials such as lignin may also be appropriately used. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The nitrogen adsorption specific surface area ($N_2SA$) of the carbon black is preferably 30 $m^2$/g or more, more preferably 50 $m^2$/g or more, still more preferably 70 $m^2$/g or more. The $N_2SA$ is also preferably 200 $m^2$/g or less, more preferably 150 $m^2$/g or less, still more preferably 130 $m^2$/g or less, further preferably 120 $m^2$/g or less. When the $N_2SA$ is within the range indicated above, the advantageous effect tends to be better achieved.

The amount of carbon black per 100 parts by mass of the rubber component content in the rubber composition is preferably 5 parts by mass or more, more preferably 10 parts by mass or more, still more preferably 15 parts by mass or more, particularly preferably 20 parts by mass or more. The upper limit of the amount is preferably 50 parts by mass or less, more preferably 40 parts by mass or less, still more preferably 35 parts by mass or less, particularly preferably 30 parts by mass or less. When the amount is within the range indicated above, the advantageous effect tends to be better achieved.

Examples of usable silica include dry silica (anhydrous silica) and wet silica (hydrous silica). Wet silica is preferred among these because it contains a large number of silanol groups. Moreover, besides such anhydrous silica and hydrous silica, silica produced from biomass materials such as rice husks may be appropriately used. Usable commercial products are available from Degussa, Rhodia, Tosoh Silica Corporation, Solvay Japan, Tokuyama Corporation, etc. These may be used alone or in combinations of two or more.

The nitrogen adsorption specific surface area ($N_2SA$) of the silica is preferably 100 $m^2$/g or more, more preferably 150 $m^2$/g or more, still more preferably 170 $m^2$/g or more, particularly preferably 200 $m^2$/g or more. Moreover, the upper limit of the $N_2SA$ of the silica is not limited but is preferably 350 $m^2$/g or less, more preferably 300 $m^2$/g or less, still more preferably 250 $m^2$/g or less. When the $N_2SA$ is within the range indicated above, the advantageous effect tends to be better achieved.

Here, the $N_2SA$ of the silica is measured by a BET method in accordance with ASTM D3037-93.

The amount of silica per 100 parts by mass of the rubber component content in the rubber composition is preferably 10 parts by mass or more, more preferably 15 parts by mass or more, still more preferably 20 parts by mass or more, particularly preferably 25 parts by mass or more. The upper limit of the amount is preferably 80 parts by mass or less, more preferably 65 parts by mass or less, still more preferably 50 parts by mass or less, particularly preferably 45 parts by mass or less, most preferably 40 parts by mass or less. When the amount is within the range indicated above, the advantageous effect tends to be better achieved.

The percentage of silica based on 100% by mass of the filler content in the rubber composition is preferably 60% by mass or higher, more preferably 80% by mass or higher, still more preferably 90% by mass or higher, particularly preferably 92% by mass or higher. The upper limit is not limited but is preferably 99% by mass or lower, more preferably 96% by mass or lower, still more preferably 95% by mass or lower. When the percentage of silica is within the range indicated above, the advantageous effect tends to be better achieved.

The amount of fillers (the total amount of fillers including carbon black and silica) per 100 parts by mass of the rubber component content in the rubber composition is preferably 10 parts by mass or more, more preferably 20 parts by mass or more, still more preferably 30 parts by mass or more, particularly preferably 35 parts by mass or more. The upper limit of the amount is preferably 100 parts by mass or less, more preferably 80 parts by mass or less, still more preferably 70 parts by mass or less, particularly preferably 65 parts by mass or less, most preferably 60 parts by mass or less. When the amount is within the range indicated above, the advantageous effect tends to be better achieved.

The rubber composition which contains silica preferably further contains a silane coupling agent.

Any silane coupling agent may be used, including those known in the rubber field. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl) trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The rubber composition desirably contains a resin component in order to better achieve the advantageous effect.

The resin component may be either a liquid resin which is liquid at room temperature (25°C) or a solid resin which is solid at room temperature (25°C). Among these, the solid resin is desirable in order to better achieve the advantageous effect.

The amount of resin components (the combined amount of liquid resins which are liquid at 25°C and solid resins which are solid at 25°C) per 100 parts by mass of the rubber component content in the rubber composition is preferably 5 parts by mass or more, more preferably 25 parts by mass or more, still more preferably 30 parts by mass or more, most preferably 35 parts by mass or more. The upper limit is preferably 80 parts by mass or less, more preferably 60 parts by mass or less, still more preferably 50 parts by mass or less. When the amount is within the range indicated above, the advantageous effect tends to be better achieved.

Examples of the solid resins include petroleum resins, terpene resins, aromatic vinyl polymers, coumarone-indene resins, coumarone resins, indene resins, phenol resins, rosin resins, and acrylic resins, all of which are solid at room temperature (25°C). These resin components may also be hydrogenated. These may be used alone or in combinations of two or more. Petroleum resins, terpene resins, and aromatic vinyl polymers are preferred among these.

The softening point of the resin components is preferably 80°C or higher, more preferably 83°C or higher, still more preferably 85°C or higher. The upper limit is preferably 150°C or lower, more preferably 120°C or lower, still more preferably 110°C or lower. When the softening point is within the range indicated above, the advantageous effect tends to be better achieved.

Here, the softening point of the resin components is determined as set forth in JIS K 6220-1:2001 using a ring and ball softening point measuring apparatus and defined as the temperature at which the ball drops down. Moreover, the softening point of the resin components is usually higher by about $50°C \pm 5°C$ than the glass transition temperature of the resin components.

Examples of the petroleum resins include C5 resins, C9 resins, C5/C9 resins, and dicyclopentadiene (DCPD) resins. Hydrogenated products of these resins are also usable.

The terpene resins refer to polymers containing terpenes as structural units. Examples include polyterpene resins produced by polymerizing terpene compounds, and aromatic modified terpene resins produced by polymerizing terpene compounds and aromatic compounds. Hydrogenated products of these resins are also usable.

The polyterpene resins refer to resins produced by polymerizing terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpene. Examples of the terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, $\alpha$-pinene and $\beta$-pinene, are classified as $\beta$-pinene resins mainly containing $\beta$-pinene and $\alpha$-pinene resins mainly containing $\alpha$-pinene, depending on the proportions of the components in the resins.

Examples of the aromatic modified terpene resins include terpene-phenol resins made from the above-mentioned terpene compounds and phenolic compounds, and terpenestyrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and $\alpha$-methylstyrene.

The aromatic vinyl polymers refer to polymers containing aromatic vinyl monomers as structural units. Examples include resins produced by polymerizing $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reaction of phenol with aldehydes such as formaldehyde, acetaldehyde, or furfural using acid or alkali catalysts. Preferred among these are those produced by reaction using acid catalysts (e.g., novolac-type phenol resins).

Examples of the rosin resins include rosin-based resins typified by natural rosins, polymerized rosins, modified rosins, and esterified compounds thereof, and hydrogenated products thereof.

The acrylic resins refer to polymers containing acrylic monomers as structural units. Examples include styrene acrylic resins such as those which contain carboxy groups and are produced by copolymerizing aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, $\alpha$-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The amount of solid resins per 100 parts by mass of the rubber component content in the rubber composition is preferably 5 parts by mass or more, more preferably 25 parts by mass or more, still more preferably 30 parts by mass or more, most preferably 35 parts by mass or more. The upper limit is preferably 80 parts by mass or less, more preferably 60 parts by mass or less, still more preferably 50 parts by mass or less. When the amount is within the range indicated above, the advantageous effect tends to be better achieved. Here, the amount of petroleum resins, the amount of terpene resins, and the amount of aromatic vinyl polymers are each also desirably within the range as indicated above.

Examples of the liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins, all of which are liquid at room temperature (25°C). Hydrogenated products of these resins are also usable.

The amount of liquid resins per 100 parts by mass of the rubber component content in the rubber composition is preferably 1 part by mass or more, more preferably 3 parts by mass or more, still more preferably 5 parts by mass or more. The upper limit is preferably 30 parts by mass or less, more preferably 20 parts by mass or less. When the amount is within the range indicated above, the advantageous effect tends to be better achieved.

Besides the above-mentioned resin components, the rubber composition may contain other plasticizers capable of imparting plasticity to rubber components. Examples of such other plasticizers include liquid plasticizers (plasticizers which are liquid at room temperature (25°C)) other than the liquid resins and solid plasticizers (plasticizers which are solid at room temperature (25°C)) other than the solid resins. These plasticizers may be used alone or in combinations of two or more.

The total amount of plasticizers (the combined amount of liquid resins and other liquid plasticizers, and solid resins and other solid plasticizers) per 100 parts by mass of the rubber component content in the rubber composition is preferably 10 parts by mass or more, more preferably 35 parts by mass or more, still more preferably 45 parts by mass or more, particularly preferably 50 parts by mass or more. The upper limit is preferably 100 parts by mass or less, more preferably 80 parts by mass or less, still more preferably 70 parts by mass or less. When the amount is within the range indicated above, the advantageous effect tends to be better achieved.

Non-limiting examples of the above-mentioned other liquid plasticizers (plasticizers which are liquid at room temperature (25°C)) include oils and liquid polymers other than the liquid resins, such as liquid diene polymers and liquid farnesene polymers. Oils are desirable among these. These may be used alone or in combinations of two or more.

When the rubber composition contains the above-mentioned other liquid plasticizers, the amount of the other liquid plasticizers per 100 parts by mass of the rubber component content is preferably 5 parts by mass or more, more preferably 7 parts by mass or more, still more preferably 10 parts by mass or more. The upper limit is preferably 30 parts by mass or less, more preferably 20 parts by mass or less, still more preferably 15 parts by mass or less. The amount of oils is also desirably within the range as indicated above. Here, the amount of liquid plasticizers includes the amount of the oils contained in extender oils.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. In addition to these oils, oils after being used as lubricating oils in mixers for processing rubber, engines, or other applications, or oils obtained by purifying waste cooking oils used in cooking establishments may also be appropriately used from the standpoint of life cycle assessment.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesenebutadiene copolymers, all of which are liquid at room temperature (25°C). These polymers may be modified at the chain end or backbone with a polar group. Hydrogenated products of these polymers are also usable.

The above-mentioned other solid plasticizers (plasticizers which are solid at room temperature (25°C)) may be materials other than the solid resins which are capable of imparting plasticity to rubber components.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The rubber composition may contain an antioxidant.

Examples of antioxidants include naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these may be used alone, or two or more of these may be used in combination.

The amount of antioxidants per 100 parts by mass of the rubber component content in the rubber composition is preferably 0.5 parts by mass or more, more preferably 1.5 parts by mass or more, still more preferably 2.0 parts by mass or more, but is preferably 10.0 parts by mass or less, more preferably 6.0 parts by mass or less, still more preferably 4.0 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these may be used alone, or two or more of these may be used in combination.

The amount of waxes per 100 parts by mass of the rubber component content in the rubber composition is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain stearic acid.

Conventional stearic acid may be used. Usable commercial products are available from NOF Corporation, Kao Corporation, FUJIFILM Wako Pure Chemical Corporation, Chiba Fatty Acid Co., Ltd., etc. Each of these may be used alone, or two or more of these may be used in combination.

The amount of stearic acid per 100 parts by mass of the rubber component content in the rubber composition is preferably 0.5 parts by mass or more, more preferably 0.8 parts by mass or more, still more preferably 1.0 parts by mass or more, but is preferably 10.0 parts by mass or less, more preferably 6.0 parts by mass or less. When the amount is within the range indicated above, the advantageous effect tends to be better achieved.

The rubber composition may contain zinc oxide.

Conventional zinc oxide may be used. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these may be used alone, or two or more of these may be used in combination.

The amount of zinc oxide per 100 parts by mass of the rubber component content in the rubber composition is preferably 0.5 parts by mass or more, more preferably 1.0 parts by mass or more, still more preferably 2.0 parts by mass or more, but is preferably 10.0 parts by mass or less, more preferably 6.0 parts by mass or less. When the amount is within the range indicated above, the advantageous effect tends to be better achieved.

The rubber composition may contain sulfur.

Examples of sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber component content in the rubber composition is preferably 0.5 parts by mass or more, more preferably 1.5 parts by mass or more, still more preferably 2.0 parts by mass or more, but is preferably 3.5 parts by mass or less, more preferably 3.0 parts by mass or less, still more preferably 2.8 parts by mass or less. When the amount is within the range indicated above, the advantageous effect tends to be better achieved.

The rubber composition may contain a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber component content in the rubber composition is preferably 1.0 parts by mass or more, more preferably 1.5 parts by mass or more, still more preferably 2.0 parts by mass or more, but is preferably 10.0 parts by mass or less, more preferably 7.0 parts by mass or less, still more preferably 5.0 parts by mass or less. When the amount is within the range indicated above, the advantageous effect tends to be better achieved.

In addition to the above-mentioned components, the rubber composition may further contain additives commonly used in the tire industry, such as organic peroxides. The amounts of such additives are each preferably 0.1 to 200 parts by mass per 100 parts by mass of the rubber component content.

The rubber composition may be prepared, for example, by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. Then, the composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

<Tire>

The rubber composition (tread rubber composition) is used in a tread portion of a tire.

Examples of tires applicable in the present invention include pneumatic tires and non-pneumatic tires, with pneumatic tires being preferred. In particular, summer tires, winter tires (e.g., studless winter tires, snow tires, cold weather tires, studded tires), and all-season tires are suitable. For example, the present tire may be used as a tire for passenger cars, large passenger cars, large SUVs, heavy duty vehicles such as trucks and buses, light trucks, or motorcycles, or as a racing tire (high performance tire). Among these, the tire is desirably used as a passenger car tire. Herein, the term "passenger car tire" refers to a tire with a normal internal pressure of 300 kPa or lower and a normal load of 1300 kg or less.

The tire can be produced from the above-described rubber composition by usual methods. For example, an unvulcanized rubber composition containing various materials may be extruded into the shape of a tread portion and then formed together with other tire components in a usual manner on a tire building machine to build an unvulcanized tire, which may then be heated and pressurized in a vulcanizer to produce a tire.

The tire of the present invention satisfies the following relationship (3):

$$(3)\ \text{Ash} \times G \leq 250$$

wherein Ash represents the ash content (% by mass) of the tread rubber composition (vulcanized rubber composition) contained in the tread portion, and G represents the thickness (mm) of the tread portion measured on the equator in a cross-section taken in the radial direction of the tire.

The upper limit of the value of "Ash × G" is preferably 200 or lower, more preferably 180 or lower, still more preferably 160 or lower, particularly preferably 140 or lower, most preferably 130 or lower. The lower limit is preferably 80 or higher, more preferably 90 or higher, still more preferably 100 or higher, particularly preferably 110 or higher. When the value is within the range indicated above, the advantageous effect tends to be better achieved.

In the tire of the present invention, the thickness G (mm) of the tread portion measured on the equator in a cross-section taken in the radial direction of the tire is preferably 15 mm or less, more preferably 13 mm or less, still more preferably 11 mm or less, particularly preferably 10 mm or less. The lower limit is preferably 5 mm or more, more preferably 7 mm or more, still more preferably 8 mm or more, particularly preferably 9 mm or more. When G is within the range indicated above, the advantageous effect tends to be better achieved.

<Thickness G>

Herein, the term "thickness G of the tread portion measured on the equator in a cross-section taken in the radial direction of the tire" refers to the distance from the tread surface to the interface of the belt-reinforcing layer, belt layer, carcass layer, or other reinforcing layer containing a fiber material, which is outermost with respect to the tire, as measured on the equator in a cross-section taken along a plane including the axis of the tire. Here, when the tread portion has a groove on the equator of the tire, the thickness G is the linear distance from the intersection of the equator and a straight line connecting the edges of the groove which are outermost in the radial direction of the tire.

Moreover, the thickness Gc of the rubber layer of the tread portion measured on the equator of the tire is preferably 12 mm or less, more preferably 8 mm or less, still more preferably 6 mm or less, while the lower limit is preferably 2 mm or more, more preferably 3 mm or more, still more preferably 4 mm or more.

Here, the above-mentioned Gc can be measured as described for the thickness G of the tread portion measured on the equator in a cross-section taken in the radial direction of the tire, and can be determined by measuring the distance from the outermost tread surface to the interface of the rubber layer formed of the above-described rubber composition, which is innermost with respect to the tire.

In the tire of the present invention, the tread portion preferably has a negative ratio S (%) of 40% or lower.

The negative ratio S (%) is preferably 35% or lower, more preferably 30% or lower. The negative ratio S (%) is preferably 10% or higher, more preferably 15% or higher, still more preferably 20% or higher. When S is within the range indicated above, the advantageous effect tends to be better achieved.

Here, the negative ratio (negative ratio within the ground contact surface of the tread portion) refers to the ratio of the total groove area within the ground contact surface relative to the total area of the ground contact surface and is determined as described below.

Herein, when the tire is a pneumatic tire, the negative ratio is calculated from the contact patch of the tire under conditions including a normal rim, a normal internal pressure, and a normal load. When the tire is a non-pneumatic tire, the negative ratio can be similarly determined without the need of a normal internal pressure.

The term "normal rim" refers to a rim specified for each tire by the standard in a standard system including standards according to which tires are provided, and may be, for example, the standard rim in JATMA, "design rim" in TRA, or "measuring rim" in ETRTO.

The term "normal internal pressure" refers to an air pressure specified for each tire by the standard and may be the maximum air pressure in JATMA, the maximum value shown in Table "TIRE LOAD LIMITS AT VARIOUS COLD INFLATION PRESSURES" in TRA, or "inflation pressure" in ETRTO.

The term "normal load" refers to a load specified for each tire by the standard and may be the maximum load capacity in JATMA, the maximum value shown in Table "TIRE LOAD LIMITS AT VARIOUS COLD INFLATION PRESSURES" in TRA, or "load capacity" in ETRTO.

The contact patch may be determined by mounting the tire on a normal rim, applying a normal internal pressure to the tire, and allowing the tire to stand at 25°C for 24 hours, followed by applying black ink to the tread surface of the tire and pressing the tread surface against a cardboard at a normal load (camber angle: 0°) for transfer to the cardboard.

The transfer may be performed on the tire in five positions, each rotated by 72° in the circumferential direction. Namely, the contact patch may be determined five times.

The contour points of each of the five contact patches are smoothly connected to draw a figure, the area of which is defined as the total area, and the transferred area as a whole constitutes the ground contact area. The average of the results of the five positions is determined and then the negative ratio (%) is calculated by the equation: [1-{Average of areas of five contact patches transferred to cardboard (parts with black ink)}/{Average of five total areas transferred to cardboard (figures obtained from contour points) }] × 100 (%).

Here, the average length or area is the simple average of the five values.

In the tire of the present invention, the groove depth D of a circumferential groove formed in the tread portion is preferably 13.0 mm or less, more preferably 10.0 mm or less, still more preferably 8.0 mm or less, particularly preferably 7.0 mm or less, but is preferably 3.0 mm or more, more preferably 4.0 mm or more, still more preferably 5.0 mm or more. When D is within the range indicated above, the advantageous effect tends to be better achieved.

Herein, the groove depth D of the circumferential groove is measured along the normal of a plane extended from the outermost tread surface forming the ground contact surface, and refers to the distance from the plane extended from the surface forming the ground contact surface to the deepest groove bottom, which is the largest among the groove depths of the circumferential grooves provided.

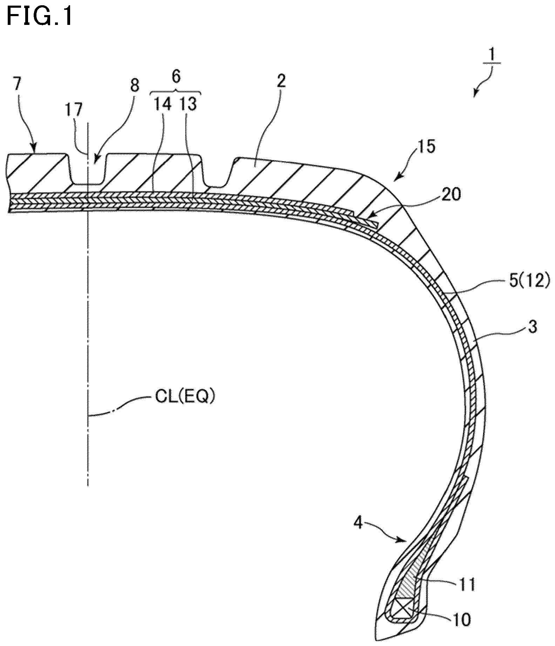

FIG. 1 shows a cross-section of a part of a pneumatic tire 1 according to one embodiment of the present invention taken in the meridional direction. Here, the tire of the present invention is not limited to the following embodiment.

In FIG. 1, the vertical direction corresponds to the radial direction of the tire (hereinafter, also referred to simply as radial direction), the horizontal direction corresponds to the axial direction of the tire (hereinafter, also referred to simply as axial direction), and the direction perpendicular to the paper corresponds to the circumferential direction of the tire (hereinafter, also referred to simply as circumferential direction). The tire 1 has a shape that is horizontally substantially symmetrical about the center line CL in FIG. 1. The center line CL is also referred to as tread center line and defines the equator EQ of the tire 1.

The tire 1 includes a tread portion 2, a sidewall portion 3, a bead portion 4, a carcass 5, and a belt 6. The tire 1 is a tubeless tire.

The tread portion 2 includes a tread face 7. The tread face 7 has a radially outwardly convex shape in a cross-section taken in the meridional direction of the tire 1. The tread face 7 will contact the road surface. The tread face 7 has a plurality of circumferentially extending grooves 8 carved therein. The grooves 8 define a tread pattern. The axially (widthwise) external part of the tread portion 2 is referred to as a shoulder portion 15. The sidewall portion 3 extends substantially inwardly in the radial direction from the end of the tread portion 2. The sidewall portion 3 consists of a crosslinked rubber or the like.

As shown in FIG. 1, the bead portion 4 is located radially substantially inward from the sidewall portion 3. The bead portion 4 includes a core 10 and an apex 11 radially outwardly extending from the core 10. The core 10 has a ring shape along the circumferential direction of the tire. The core 10 consists of a wound inextensible wire. Typically, a steel wire is used in the core 10. The apex 11 is radially outwardly tapered. The apex 11 consists of a very hard crosslinked rubber or the like.

In the present embodiment, the carcass 5 consists of a carcass ply 12. The carcass ply 12 extends between the opposite bead portions 4 along the inner sides of the tread portion 2 and the sidewall portions 3. The carcass ply 12 is folded around the core 10 from the inside to the outside in the axial direction of the tire. Though not shown, the carcass ply 12 consists of a large number of parallel cords and a topping rubber. The absolute value of the angle of each cord relative to the equator EQ (CL) is usually 70° to 90°. In other words, the carcass 5 has a radial structure.

In the present embodiment, the belt 6 is located radially outward of the carcass 5. The belt 6 is stacked on the carcass 5. The belt 6 reinforces the carcass 5. The belt 6 may consist of an inner layer belt 13 and an outer layer belt 14. In the present embodiment, the widths of the belts 13 and 14 are different from each other.

Though not shown, the inner layer belt 13 and the outer layer belt 14 each usually consist of a large number of parallel cords and a topping rubber. Each cord is desirably inclined to the equator EQ. Desirably, the cords of the inner layer belt 13 are inclined in a direction opposite to that of the cords of the outer layer belt.

Though not shown, an embodiment may be used in which a band is stacked on the radially outer side of the belt 6. The width of the band is larger than that of the belt 6. The band may consist of cords and a topping rubber. The cords are spirally wound. The belt is constrained by the cords, so that the belt 6 is inhibited from lifting. The cords desirably consist of organic fibers. Preferred examples of the organic fibers include nylon fibers, polyester fibers, rayon fibers, polyethylene naphthalate fibers, and aramid fibers.

Though not shown, an embodiment may be used in which an edge band is provided radially outward of the belt 6 and near the widthwise end (edge portion) of the belt 6. Like the band, the edge band may consist of cords and a topping rubber. An exemplary edge band may be stacked on the upper surface of a step 20 of the wider inner layer belt 13. In an exemplary embodiment, the cords of the edge band are inclined in the same direction as the cords of the narrower outer layer belt 14 and are biased relative to the cords of the wider inner layer belt 13.

Though not shown, an embodiment may be used in which a cushion rubber layer is stacked on the carcass 5 near the widthwise end of the belt 6. In an exemplary embodiment, the cushion layer consists of a soft crosslinked rubber. The cushion layer absorbs the stress on the belt edge.

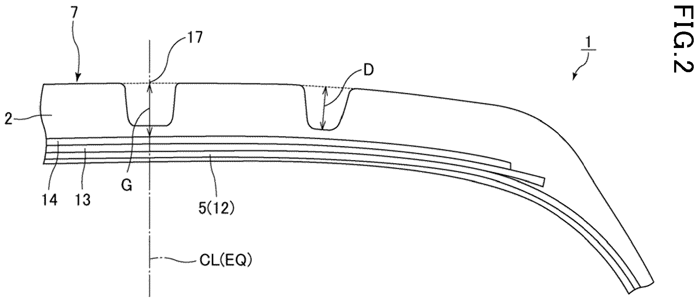

FIG. 2 shows a cross-section of the tread portion 2 of the tire 1 taken along a plane including the tire axis. In FIGs. 1 and 2, a crown center 17 located at the equator EQ corresponds to "the equator in a cross-section of the tread portion 2 taken in the radial direction of the tire".

The tire 1 satisfies relationship (3) with respect to the ash content Ash (% by mass) of the tread rubber composition (vulcanized rubber composition) contained in the tread portion 2 and the thickness G of the tread portion 2 measured at the crown center 17 of the tire 1 (the radial dimension from the tread face 7 to the upper surface of the outer layer belt 14).

The tread portion 2 of the tire 1 includes circumferential grooves 8. In the tire 1, the groove depth D of the circumferential grooves 8 refers to the distance in the normal direction from a plane extended from the tread face 7 forming the ground contact surface to the deepest groove bottom and also refers to the depth of the deepest groove among the circumferential grooves 8 provided.

EXAMPLES

The present invention will be specifically described with reference to, but not limited to, examples.

The chemicals used in the examples and comparative examples are listed below.

NR: TSR20

SBR: NS616 (non-oil extended SBR, styrene content: 21% by mass, vinyl content: 66 mol%, Tg: -23°C, Mw: 240,000) available from Zeon Corporation

BR: BR150B (cis content: 97% by mass) available from Ube Industries, Ltd.

Carbon black: DIABLACK I (N220, $N_2SA$: 114 $m^2/g$, DBP: 114 mL/100 g) available from Mitsubishi Chemical Corporation

Silica 1: ZEOSIL 1115MP ($N_2SA$: 115 $m^2/g$) available from Rhodia

Silica 2: Ultrasil VN3 ($N_2SA$: 175 $m^2/g$) available from Evonik Degussa

Silica 3: 9100Gr ($N_2SA$: 235 $m^2/g$) available from Degussa

Oil: VIVATEC 400/500 (TDAE oil) available from H&R

Silane coupling agent: Si266 (bis(3-triethoxysilylpropyl)disulfide) available from Evonik Degussa

Solid resin: YS Resin PX850 (softening point: 85°C, β-pinene resin (terpene resin)) available from Yasuhara Chemical Co., Ltd.

Antioxidant: Antigene 6C (antioxidant, N-(1,3-dimethylbutyl)-N'-phenyl-p-phenylenediamine) available from Sumitomo Chemical Co., Ltd.

Wax: Ozoace 0355 available from Nippon Seiro Co., Ltd.

Stearic acid: TSUBAKI available from NOF Corporation

Zinc oxide: zinc oxide #2 available from Mitsui Mining & Smelting Co., Ltd.

Sulfur: powdered sulfur available from Tsurumi Chemical Industry Co., Ltd.

Vulcanization accelerator 1: NOCCELER CZ (N-cyclohexyl-2-benzothiazolylsulfenamide) available from Ouchi Shinko Chemical Industrial Co., Ltd.

Vulcanization accelerator 2: NOCCELER D (N,N'-diphenylguanidine) available from Ouchi Shinko Chemical Industrial Co., Ltd.

(Examples and Comparative Examples)

According to the formulation recipe shown in each table, the materials other than the sulfur and vulcanization accelerators are kneaded for five minutes at 150°C using a 1.7 L Banbury mixer (Kobe Steel, Ltd.) to give a kneaded mixture. Next, the sulfur and vulcanization accelerators are added to the kneaded mixture, and they are kneaded for five minutes at 80°C using an open roll mill to obtain an unvulcanized rubber composition. The unvulcanized rubber composition is formed into the shape of a tread portion and assembled with other tire components to build an unvulcanized tire. The unvulcanized tire is press-vulcanized at 150°C for 12 minutes to prepare a test tire (size: 175/60R18).

The test tires prepared as above are subjected to physical property measurements and evaluations as described below. The results are shown in the tables. Here, the standard comparative examples in Tables 1 and 2 are as follows.

Standard examples for fuel economy in Tables 1 and 2: Comparative Examples 1-8 and 2-8

Standard examples for abrasion resistance during high-speed running in Tables 1 and 2: Comparative Examples 1-3 and 2-3

<Polymer content (PC)>

A rubber test sample cut out of the tread of each test tire is subjected to acetone extraction by a method for measuring the acetone extractable content in accordance with JIS K 6229:2015.

The decrease in the amount (mass) of the sample after the acetone extraction is measured when it is heated (from room temperature to 750°C) in nitrogen for pyrolysis and gasification of organic matter in accordance with JIS K 6226-1:2003, and PC (% by mass) is calculated therefrom.

<Ash content (Ash)>

The sample after the pyrolysis and gasification in the above section "Polymer content (PC)" is heated in the air for oxidative combustion.

Then, the mass of the components which remain unburned in the oxidative combustion (ash) is measured, from which Ash (% by mass) is calculated.

<Abrasion resistance during high-speed running>

A vehicle equipped with each set of test tires is subjected to 50,000 km running at an average speed of 100 km/h. Then, the groove depth in the tread portion is measured. The amount of wear of the tread portion is calculated from the measured depth and expressed as an index relative to that of the evaluation standard taken as 100. A higher index indicates a smaller amount of wear and better abrasion resistance during high-speed running.

<Fuel economy>

The rolling resistance of each test tire is measured using a rolling resistance tester when it is run under conditions including a 15×6JJ rim, an internal pressure of 230 kPa, a load of 3.43 kN, and a speed of 80 km/h. The results are expressed as an index (fuel economy index) relative to that of the standard comparative example taken as 100. A higher index indicates a smaller rolling resistance and better fuel economy.

[Table 1]

| | | Comparative Example | | | | | | | | Example | | | | | | | | |
|---|---|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-1 | 1-2 | 1-3 | 1-4 | 1-5 | 1-6 | 1-7 | 1-8 | 1-9 |
| Amount (parts by mass) | NR | | | | | | | | | | | | | | | | | |
| | SBR | 85 | 85 | 85 | 85 | 85 | 85 | 85 | 85 | 85 | 85 | 85 | 85 | 85 | 85 | 85 | 85 | 85 |
| | BR | 15 | 15 | 15 | 15 | 15 | 15 | 15 | 15 | 15 | 15 | 15 | 15 | 15 | 15 | 15 | 15 | 15 |
| | Carbon black | 35 | 5 | 10 | 55 | 5 | 5 | 10 | 15 | 20 | 20 | 10 | 20 | 20 | 20 | 20 | 20 | 20 |
| | Silica 1 (1115MP) | | | | | | 105 | 85 | | 65 | | | | | | | | |
| | Silica 2 (VN3) | 55 | 100 | 85 | 15 | 100 | | | | | 60 | | | | | | | |
| | Silica 3 (9100Gr) | | | | | | | | 75 | | | 60 | 45 | 40 | 50 | 45 | 45 | 45 |
| | Oil | 25 | 40 | 30 | 15 | 40 | 38 | 25 | 35 | 18 | 20 | 20 | 15 | 10 | 20 | 15 | 15 | 15 |
| | Silane coupling agent | 4.4 | 8.0 | 6.8 | 1.2 | 8.0 | 8.4 | 6.8 | 6.0 | 5.2 | 4.8 | 4.8 | 3.6 | 3.2 | 4.0 | 3.6 | 3.6 | 3.6 |
| | Solid resin | 20 | 30 | 20 | | 30 | 35 | 20 | 30 | 25 | 30 | 35 | 35 | 35 | 35 | 35 | 35 | 35 |
| | Antioxidant | 2 | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 | 2 |
| | Stearic acid | 1 | 1 | 1 | 1 | 1 | 1 | 1 | 1 | 1 | 1 | 1 | 1 | 1 | 1 | 1 | 1 | 1 |
| | Zinc oxide | 2 | 2 | 2 | 2 | 2 | 2 | 2 | 2 | 2 | 2 | 2 | 2 | 2 | 2 | 2 | 2 | 2 |
| | Sulfur | 2 | 2 | 2 | 2 | 2 | 2 | 2 | 2 | 2 | 2 | 2 | 2 | 2 | 2 | 2 | 2 | 2 |
| | Vulcanization accelerator 1 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 2 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Physical properties | PC (% by mass) | 50 | 50 | 56 | 50 | 50 | 50 | 55 | 52 | 55 | 56 | 60 | 66 | 68 | 63 | 66 | 66 | 66 |
| | Ash (% by mass) | 15 | 28 | 26 | 9 | 28 | 29 | 26 | 21 | 21 | 20 | 18 | 14 | 13 | 16 | 14 | 14 | 14 |
| | Thickness G (mm) | 18 | 10 | 10 | 18 | 8 | 10 | 10 | 10 | 10 | 10 | 10 | 10 | 10 | 10 | 8 | 12 | 10 |
| | Ash × G | 270 | 280 | 260 | 162 | 224 | 290 | 260 | 210 | 210 | 200 | 180 | 140 | 130 | 160 | 112 | 168 | 140 |
| | Negative ratio S (%) | 28 | 28 | 28 | 28 | 28 | 28 | 28 | 28 | 28 | 28 | 28 | 28 | 28 | 28 | 26 | 30 | 33 |
| | Circumferential groove depth D (mm) | 13.0 | 7.0 | 7.0 | 13.0 | 6.0 | 7.0 | 7.0 | 7.0 | 7.0 | 7.0 | 7.0 | 7.0 | 7.0 | 7.0 | 5.5 | 8.4 | 7.0 |
| Evaluation | (a) Fuel economy | 93 | 89 | 92 | 99 | 98 | 88 | 93 | 100 | 103 | 106 | 107 | 112 | 117 | 110 | 112 | 112 | 114 |
| | (b) Abrasion resistance during high-speed running | 95 | 98 | 100 | 95 | 98 | 95 | 98 | 98 | 102 | 110 | 117 | 124 | 128 | 119 | 126 | 110 | 112 |
| | Overall performance (average of (a) and (b)) | 94 | 93 | 96 | 97 | 98 | 91 | 96 | 99 | 102 | 108 | 112 | 118 | 122 | 115 | 119 | 111 | 113 |

16

[Table 2]

| | | Comparative Example | | | | | | | | Example | | | | | | | | |
|---|---|---|---|---|---|---|---|---|---|---|---|---|---|---|---|---|---|---|
| | | 2-1 | 2-2 | 2-3 | 2-4 | 2-5 | 2-6 | 2-7 | 2-8 | 2-1 | 2-2 | 2-3 | 2-4 | 2-5 | 2-6 | 2-7 | 2-8 | 2-9 |
| Amount (parts by mass) | NR | 15 | 15 | 15 | 15 | 15 | 15 | 15 | 15 | 15 | 15 | 15 | 15 | 15 | 15 | 15 | 15 | 15 |
| | SBR | 75 | 75 | 75 | 75 | 75 | 75 | 75 | 75 | 75 | 75 | 75 | 75 | 75 | 75 | 75 | 75 | 75 |
| | BR | 10 | 10 | 10 | 10 | 10 | 10 | 10 | 10 | 10 | 10 | 10 | 10 | 10 | 10 | 10 | 10 | 10 |
| | Carbon black | 35 | 5 | 10 | 10 | 5 | 5 | 10 | 15 | 20 | 20 | 10 | 20 | 20 | 20 | 20 | 20 | 20 |
| | Silica 1 (1115MP) | 55 | | 85 | 55 | | 105 | 85 | | 65 | | | | | | | | |
| | Silica 2 (VN3) | | 100 | | | 100 | | | | | 60 | | | | | | | |
| | Silica 3 (9100Gr) | | | | 15 | | | | 75 | | | 60 | 45 | 40 | 50 | 45 | 45 | 45 |
| | Oil | 25 | 40 | 30 | 15 | 40 | 38 | 25 | 35 | 18 | 20 | 20 | 15 | 10 | 20 | 15 | 15 | 15 |
| | Silane coupling agent | 4.4 | 8.0 | 6.8 | 1.2 | 8.0 | 8.4 | 6.8 | 6.0 | 5.2 | 4.8 | 4.8 | 3.6 | 3.2 | 4.0 | 3.6 | 3.6 | 3.6 |
| | Solid resin | 20 | 30 | 20 | | 30 | 35 | 20 | 30 | 25 | 30 | 35 | 35 | 35 | 35 | 35 | 35 | 35 |
| | Antioxidant | 2 | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 | 2 |
| | Stearic acid | 1 | 1 | 1 | 1 | 1 | 1 | 1 | 1 | 1 | 1 | 1 | 1 | 1 | 1 | 1 | 1 | 1 |
| | Zinc oxide | 2 | 2 | 2 | 2 | 2 | 2 | 2 | 2 | 2 | 2 | 2 | 2 | 2 | 2 | 2 | 2 | 2 |
| | Sulfur | 2 | 2 | 2 | 2 | 2 | 2 | 2 | 2 | 2 | 2 | 2 | 2 | 2 | 2 | 2 | 2 | 2 |
| | Vulcanization accelerator 1 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 2 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Physical properties | PC (% by mass) | 50 | 50 | 56 | 50 | 50 | 50 | 55 | 52 | 55 | 56 | 60 | 66 | 68 | 63 | 66 | 66 | 66 |
| | Ash (% by mass) | 15 | 28 | 26 | 9 | 28 | 29 | 26 | 21 | 21 | 20 | 18 | 14 | 13 | 16 | 14 | 14 | 14 |
| | Thickness G (mm) | 18 | 10 | 10 | 18 | 8 | 10 | 10 | 10 | 10 | 10 | 10 | 10 | 10 | 10 | 8 | 12 | 10 |
| | Ash × G | 270 | 280 | 260 | 162 | 224 | 290 | 260 | 210 | 210 | 200 | 180 | 140 | 130 | 160 | 112 | 168 | 140 |
| | Negative ratio S (%) | 28 | 28 | 28 | 28 | 28 | 28 | 28 | 28 | 28 | 28 | 28 | 28 | 28 | 28 | 26 | 30 | 33 |
| | Circumferential groove depth D (mm) | 13.0 | 7.0 | 7.0 | 13.0 | 6.0 | 7.0 | 7.0 | 7.0 | 7.0 | 7.0 | 7.0 | 7.0 | 7.0 | 7.0 | 5.5 | 8.4 | 7.0 |
| Evaluation | (a) Fuel economy | 92 | 90 | 93 | 98 | 96 | 89 | 93 | 100 | 104 | 108 | 108 | 112 | 118 | 110 | 114 | 112 | 115 |
| | (b) Abrasion resistance during high-speed running | 96 | 97 | 100 | 94 | 97 | 96 | 97 | 97 | 104 | 110 | 118 | 126 | 130 | 120 | 124 | 109 | 113 |
| | Overall performance (average of (a) and (b)) | 94 | 94 | 97 | 96 | 97 | 93 | 95 | 99 | 104 | 109 | 113 | 119 | 124 | 115 | 119 | 111 | 114 |

The tires of the examples satisfying relationships (1) to (3) have excellent abrasion resistance during high-speed running.

REFERENCE SIGNS LIST

1 tire
2 tread portion
3 sidewall portion
4 bead portion
5 carcass
6 belt
7 tread face
8 groove
10 core
11 apex
12 carcass ply
13 inner layer belt
14 outer layer belt
15 shoulder portion
17 crown center (tread center line CL, equator EQ of tire 1)
20 step
D groove depth of circumferential groove
G thickness of tread portion measured on equator in cross-section taken in radial direction of tire

**Claims**

1. A tire, comprising a tread portion,

   the tire satisfying the following relationships (1) to (3):

$$(1)\ \ PC \geq 55\%\ by\ mass;$$

$$(2)\ \ 10\%\ by\ mass \leq Ash \leq 25\%\ by\ mass;$$

   and

$$(3)\ \ Ash \times G \leq 250,$$

   wherein PC and Ash represent a polymer content (% by mass) and an ash content (% by mass), respectively, of a rubber composition comprised in the tread portion, and G represents a thickness (mm) of the tread portion measured on an equator in a cross-section taken in a radial direction of the tire,
   when the polymer content PC is determined in accordance with section <Polymer content (PC)> of the description,
   when the ash content Ash is determined in accordance with section <Ash content (Ash)> of the description, and
   when G is determined in accordance with section <Thickness G> of the description.

2. The tire according to claim 1, satisfying the following relationship:

$$PC \geq 63\%\ by\ mass.$$

3. The tire according to claim 1 or 2, satisfying the following relationship:

$$10\%\ by\ mass \leq Ash \leq 18\%\ by\ mass.$$

4. The tire according to any one of claims 1 to 3, satisfying the following relationship:

$$Ash \times G \leq 160.$$

5. The tire according to any one of claims 1 to 4, satisfying the following relationship:

$$G \leq 10\ mm.$$

6. The tire according to any one of claims 1 to 5,
wherein the rubber composition has a styrene-butadiene rubber content of 80 to 95% by mass and a polybutadiene rubber content of 5 to 20% by mass, each based on 100% by mass of a rubber component content in the rubber composition.

7. The tire according to any one of claims 1 to 6,
wherein the rubber composition has a silica content of 10 to 45 parts by mass per 100 parts by mass of a rubber component content in the rubber composition.

8. The tire according to any one of claims 1 to 6,
wherein the rubber composition comprises a solid resin.

9. The tire according to any one of claims 1 to 8,

wherein the tread portion has a negative ratio S (%) of 30% or lower,
when the negative ratio S is calculated in accordance with the specification.

10. The tire according to any one of claims 1 to 9,
wherein the tire has a circumferential groove having a groove depth D of 8.0 mm or less.

11. The tire according to any one of claims 1 to 10, which is a passenger car tire.

**Patentansprüche**

1. Reifen, umfassend einen Laufstreifenabschnitt,

wobei der Reifen den folgenden Verhältnissen (1) bis (3) genügt:

$$(1) \quad PC \geq 55\ Massen\text{-}\%;$$

$$(2) \quad 10\ Massen\text{-}\% \leq Ash \leq 25\ Massen\text{-}\%;$$

und

$$(3) \quad Ash \times G \leq 250,$$

wobei PC und Ash einen Polymergehalt (Massen-%) beziehungsweise einen Aschegehalt (Massen-%) einer in dem Laufstreifenabschnitt umfassten Kautschukzusammensetzung darstellen, und G eine Dicke (mm) des Laufstreifenabschnitts darstellt, die auf einem Äquator in einem in einer Radialrichtung des Reifens genommenen Querschnitt gemessen ist,
wenn der Polymergehalt PC gemäß dem Abschnitt <Polymergehalt (PC)> der Beschreibung bestimmt ist,
wenn der Aschegehalt Ash gemäß dem Abschnitt <Aschegehalt (Ash)> der Beschreibung bestimmt ist, und
wenn G gemäß dem Abschnitt <Dicke G> der Beschreibung bestimmt ist.

2. Reifen nach Anspruch 1, der dem folgenden Verhältnis genügt:

$$PC \geq 63\ Massen\text{-}\%.$$

3. Reifen nach Anspruch 1 oder 2, der dem folgenden Verhältnis genügt:

$$10 \text{ Massen-\%} \leq Ash \leq 18 \text{ Massen-\%}.$$

4. Reifen nach einem der Ansprüche 1 bis 3, der dem folgenden Verhältnis genügt:

$$Ash \times G \leq 160.$$

5. Reifen nach einem der Ansprüche 1 bis 4, der dem folgenden Verhältnis genügt:

$$G \leq 10 \text{ mm}.$$

6. Reifen nach einem der Ansprüche 1 bis 5,
wobei die Kautschukzusammensetzung einen Styrol-Butadien-Kautschuk-Gehalt von 80 bis 95 Massen-% und einen Polybutadien-Kautschuk-Gehalt von 5 bis 20 Massen-% aufweist, jeweils bezogen auf 100 Massen-% eines Kautschukkomponentengehalts in der Kautschukzusammensetzung.

7. Reifen nach einem der Ansprüche 1 bis 6,
wobei die Kautschukzusammensetzung einen Siliziumdioxidgehalt von 10 bis 45 Massenteilen pro 100 Massenteile eines Kautschuckomponentengehalts in der Kautschukzusammensetzung aufweist.

8. Reifen nach einem der Ansprüche 1 bis 6,
wobei die Kautschukzusammensetzung ein festes Harz umfasst.

9. Reifen nach einem der Ansprüche 1 bis 8,

wobei der Laufstreifenabschnitt einen Negativanteil S (%) von 30% oder niedriger aufweist,
wenn der Negativanteil S gemäß der Beschreibung berechnet ist.

10. Reifen nach einem der Ansprüche 1 bis 9,
wobei der Reifen eine Umfangsrille mit einer Rillentiefe D von 8,0 mm oder weniger aufweist.

11. Reifen nach einem der Ansprüche 1 bis 10, der ein Personenkraftfahrzeugreifen ist.


**Revendications**

1. Pneumatique, comprenant une portion de bande de roulement, le pneumatique satisfaisant les relations (1) à (3) suivantes :

$$(1) \quad PC \geq 55 \text{ \% en masse} ;$$

$$(2) \quad \text{\% en masse} \leq cendres \leq 25 \text{ \% en masse} ;$$

et

$$(3) \quad cendres \times G \leq 250$$

dans lequel PC et cendres représentent une teneur en polymère (% en masse) et une teneur en cendres (% en masse), respectivement, d'une composition de caoutchouc comprise dans la portion de bande de roulement et G représente une épaisseur (mm) de la portion de bande de roulement mesurée sur un équateur dans une section transversale prise dans une direction radiale du pneumatique,
lorsque la teneur en polymère PC est déterminée selon la section <teneur en polymère (PC) > de la description,
lorsque la teneur en cendres cendres est déterminée selon la section < teneur en cendres (cendres) > de la description, et
lorsque G est déterminée selon la section < épaisseur G > de la description.

2. Pneumatique selon la revendication 1, satisfaisant la relation suivante :

$$PC \geq 63 \text{ % en masse.}$$

3. Pneumatique selon la revendication 1 ou 2, satisfaisant la relation suivante :

$$10 \text{ % en masse} \leq \text{cendres} \leq 18 \text{ % en masse.}$$

4. Pneumatique selon l'une quelconque des revendications 1 à 3, satisfaisant la relation suivante :

$$\text{cendres x G} \leq 160.$$

5. Pneumatique selon l'une quelconque des revendications 1 à 4, satisfaisant la relation suivante :

$$G \leq 10 \text{ mm.}$$

6. Pneumatique selon l'une quelconque des revendications 1 à 5, dans lequel la composition de caoutchouc a une teneur en caoutchouc de styrène-butadiène de 80 à 95 % en masse et une teneur en caoutchouc de polybutadiène de 5 à 20 % en masse, chacune basée sur 100 % en masse d'une teneur de composant de caoutchouc dans la composition de caoutchouc.

7. Pneumatique selon l'une quelconque des revendications 1 à 6, dans lequel la composition de caoutchouc a une teneur en silice de 10 à 45 parties en masse par 100 parties en masse d'une teneur de composant de caoutchouc dans la composition de caoutchouc.

8. Pneumatique selon l'une quelconque des revendications 1 à 6, dans lequel la composition de caoutchouc comprend une résine solide.

9. Pneumatique selon l'une quelconque des revendications 1 à 8, dans lequel la portion de bande de roulement a un rapport négatif S (%) de 30 % ou moins,
lorsque le rapport négatif S est calculé selon le fascicule.

10. Pneumatique selon l'une quelconque des revendications 1 à 9, dans lequel le pneumatique a un sillon circonférentiel ayant une profondeur de sillon D de 8,0 mm ou moins.

11. Pneumatique selon l'une quelconque des revendications 1 à 10, qui est un pneumatique de voiture à passagers.

# FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021050355 A
- US 4414370 A
- JP S596207 A
- JP H558005 B
- JP H1313522 A
- US 5010166 A

**Non-patent literature cited in the description**

- annual research report TREND. Toagosei Co., Ltd., 2000, vol. 3, 42-45